# EUROPÄISCHE PATENTANMELDUNG

(11) **EP 2 083 249 A2**
(43) Veröffentlichungstag der Anmeldung: **29.07.2009**
(21) Anmeldenummer: 09075041.5
(22) Anmeldetag: 21.01.2009
(51) Int. Cl.: G01F 1/66, G01F 15/00

(54) **Verfahren und Vorrichtung zur Herstellung der optischen Zugänglichekeit zu Fluiden für Strömungsmessungen**

(30) Priorität: 22.01.2008 DE 102008005886
(71) Anmelder: Dues, Michael, 50126 Bergheim (DE)
(72) Erfinder: Dues, Michael, 50126 Bergheim (DE)

(57) **Zusammenfassung**

Der vorliegenden Erfindung liegt die Aufgabe zugrunde, die optische Zugänglichkeit für optische Strömungsmessverfahren bzw. für ein optisches Kalibrierverfahren bei der volumetrischen Durchflussmessung von Fluiden in Strömungsanlagen direkt vor Ort herzustellen, ohne die Strömungsverhältnisse durch die Messung bzw. Kalibriermessung selbst zu beeinflussen und insbesondere, ohne den Anlagenbetrieb unterbrechen zu müssen.

Die vorliegende Erfindung löst diese Aufgabe dadurch, dass während des Anlagenbetriebs ein Anschweißrohr (7) der erfindungsgemäßen Vorrichtung auf die Strömungsanlage (1) im Bereich der durchzuführenden Strömungsmessung fluiddicht aufgeschweißt, auf diesem eine Absperrarmatur (6) montiert, mittels eines bekannten Anbohrverfahrens unter Druck (Hot-Tapping-Verfahren) die Strömungsanlage (1) in der erfindungsgemäßen Vorrichtung aufgebohrt, ein Einschubfenster (10) in das Vorrichtungsgehäuse dergestalt eingeschoben und arretiert wird, dass die dem Fluid zugewandte Seite des Einschubfensters (10) der Strömungsanlagenkontur an dieser Stelle entspricht, und abschließend die Einschubvorrichtung (13) aus dem Vorrichtungsgehäuse wieder entfernt und auf dem Vorrichtungsgehäuse ein Schauglas (5) montiert wird, so dass an dieser Anlagenstelle die optische Zugänglichkeit zum Fluid für optische Strömungsmessungen während des Anlagenbetriebs hergestellt wird, ohne die Strömung im Anlagenströmungskanal bzw. der Strömungsgrenzschicht der Anlage zu beeinflussen und ohne den Anlagenbetrieb unterbrechen zu müssen. Der gesamte Vorgang erfolgt dabei durch den geeigneten Einsatz der Absperrarmatur (6) sowie durch Dichtelemente zwischen Einschubvorrichtung und Vorrichtungsgehäuse ohne Fluidleckage aus der Strömungsanlage bzw. der erfindungsgemäßen Vorrichtung.

## Beschreibung

Die Erfindung betrifft entsprechend dem Oberbegriff des Anspruchs 1 ein Verfahren und entsprechend dem Oberbegriff des Anspruchs 2 eine Vorrichtung zur Durchführung des Verfahrens zur Herstellung der optischen Zugänglichkeit zu Strömungsanlagen für optische Strömungsmessungen von Fluiden in Strömungsanlagen, ohne die Strömungsverhältnisse durch die Messung selbst zu beeinflussen und ohne den Anlagenbetrieb für den Einbau der Vorrichtung und die Durchführung der Strömungsmessung unterbrechen zu müssen, insbesondere zur nachträglichen Herstellung der optischen Zugänglichkeit zu Fluiden für Strömungsmessungen nach den Verfahren Laser-Doppler-Velozimetrie (LDV) und Partikel-Image-Velozimetrie (PIV).

Bei älteren Messmethoden des Volumenstromes von Fluiden wurden durch die Messung selbst die Strömungsbedingungen beeinflusst. Hierzu zählen Vorrichtungen mit Normblenden, Staudruck- und Venturidüsen, sowie Turbinenrad- und Hitzdrahtanenometer.

Modernere Messmethoden wie das Ultraschallverfahren nach dem Laufzeit- oder Dopplerprinzip und das weit verbreitete magnetisch-induktive Durchflussmessverfahren (MID) beeinflussen zwar nicht mehr die Strömung, die Messgenauigkeit hängt aber von den Strömungsverhältnissen ab. Weichen diese am Einbauort der Messeinrichtung von den idealen rotationssymmetrischen sowie wirbel- und drallfreien Geschwindigkeitsverteilungen ab, die auf den Herstellerprüfständen zur Gerätekalibrierung vorgefunden werden, verschlechtert sich die Messgenauigkeit der Geräte oft in starker und unbekannter Weise. Derartig unterschiedliche Strömungsverhältnisse können beispielsweise durch Unterschreitung der in den Herstellervorschriften geforderten minimalen Vor- und Nachlaufstrecken der Geräte nach Anlageneinbauten wie Ventilen und Absperrklappen vor dem Messgerät hervorgerufen werden. Die geforderten Vorlaufstrecken und Strömungsbedingungen sind hierbei in der Praxis insbesondere bei Großanlagen, größeren Rohrdimensionen und nachträglichen Einbauten nicht oder nur mit erheblichem Kostenaufwand zu erfüllen, so dass als wesentlicher Nachteil bisheriger Volumen- bzw. Volumenstrom-Messverfahren ein Nachweis der Messgenauigkeit durch Kalibrierung in der Anlage vor Ort unter Berücksichtigung nicht idealer, asymmetrischer sowie wirbel- und drallbehafteter Strömungen am Messort nicht möglich ist. Darüber hinaus wurden zeitliche Veränderungen derartiger Strömungsbedingungen bei bisherigen Messverfahren nicht berücksichtigt.

Zur Lösung dieser Probleme ist daher in der Deutschen Patentanmeldung DE 10 2007 053 105 ein Verfahren sowie eine Vorrichtung zur Durchführung des Verfahrens offenbart, mit deren Hilfe bei der volumetrischen Durchflussmessung von Fluiden in Rohrleitungen eine adaptive Messkalibrierung direkt in der Anlage vor Ort und die Diagnose weiterer Strömungsparameter wie Wirbelausbildung, Drall und Strömungsverteilung in axialer und Umfangsrichtung auch bei nicht idealen, asymmetrischen sowie wirbel- und drallbehafteten Strömungen am Messort, hervorgerufen beispielsweise durch unzureichende Vor- und Nachlaufbedingungen der Messeinrichtung, ermöglicht wird, ohne die Strömungsverhältnisse durch die Messung selbst zu beeinflussen. Gelöst wird dort die Aufgabe der Erfindung dadurch, dass eines der bekannten Volumenstrom-Messverfahren wie MID oder Ultraschallverfahren zur Messgerätekalibrierung mit einem der bekannten optischen Strömungsmessverfahren wie der Laser-Doppler-Velozimetrie (LDV) oder der Partikel-Image-Velozimetrie (PIV) kombiniert wird. Hierzu kann die Messvorrichtung für das optische Strömungsmessverfahren einem Durchflussmessgerät wie einem magnetisch-induktivem Durchflussmessgerät (MID) vor- oder nachgeschaltet oder darin integriert sein.

Der Nachteil des dort vorgestellten Verfahrens sowie allgemein beim Stand der Technik optischer Strömungsmessverfahren ist, dass in schon im Betrieb befindlichen Strömungsanlagen zur Herstellung der optischen Zugänglichkeit für optische Strömungsmessverfahren ein Teil der Strömungsanlage beispielsweise durch ein Rohrleitungsstück mit einer Fensterkammer bzw. mit darin integrierten Fenstern ersetzt werden muss. Hierzu ist es erforderlich, dass die Anlage außer Betrieb genommen und im Bedarfsfall entleert wird. Dies ist häufig, beispielsweise bei Femwärmenetzen, mit sehr hohen Betriebsausfallkosten verbunden.

In der DE 199 48 827 ist zwar ein Verfahren beschrieben, das Strömungsmessverfahren wie die Laser-Doppler-Velozimetrie (LDV) oder die Partikel-Image-Velozimetrie (PIV) auch ohne optischen Zugang zur Strömungsanlage zulässt.

Voraussetzung für dieses Verfahren ist jedoch der kostenintensive, gefährliche und durch Strahlenschutzbestimmungen aufwändige Einsatz von undurchsichtige Materie durchdringende Strahlung wie Röntgenstrahlung anstatt von Lichtstrahlen. Handelsübliche und damit kostengünstige optische Strömungsmess-Systeme und -Verfahren scheiden hierbei somit aus.

In der US 4,631,967 ist eine Vorrichtung beschrieben, mit der mittels einer Kolbenstange durch ein Ventil wie einem Kugelhahn hindurch Messsensoren wie Thermometer, Manometer, Flügelanemometer oder Dopplersensoren in das Rohr einer Strömungsanlage hineingeschoben werden können. Die jeweilige Messung erfolgt also bei hineingeschobener Kolbenstange, wobei die Strömung am Ort der Messung in des Rohres, also die lokalen Strömungsgeschwindigkeiten sowie der lokale Turbulenzgrad durch die Messung selbst verändert werden. Eine genaue Messung des Strömungsprofils im Rohr z.B. zur Kalibrierung eines magnetisch-induktiven Durchflussmessgerätes vor Ort ist mit der vorgestellten Vorrichtung somit nicht möglich. Ein Vorrichtungsteil, dass etwa bei nicht vollständig hineingeschobenen Sensoren eine Beeinflussung der Strömung verhindern würde, wie etwa ein der Rohrkontur angepasstes Einschubfenster, ist in der vorgestellten Vorrichtung nicht beschrieben.

Der vorliegenden Erfindung liegt demzufolge die Aufgabe zugrunde, ein Verfahren sowie eine Vorrichtung zur Durchführung des Verfahrens bereitzustellen, mit deren Hilfe die optische Zugänglichkeit für optische Strömungsmessverfahren bzw. für ein optisches Kalibrierverfahren bei der volumetrischen Durchflussmessung von Fluiden in Strömungsanlagen direkt vor Ort hergestellt wird, ohne die Strömungsverhältnisse durch die Messung bzw. Kalibriermessung selbst zu beeinflussen und insbesondere, ohne den Anlagenbetrieb unterbrechen zu müssen.

Erfindungsgemäß wird diese Aufgabe durch das Verfahren entsprechend der kennzeichnenden Merkmale des Anspruchs 1 und durch die Vorrichtung entsprechend der kennzeichnenden Merkmale des Anspruchs 2 gelöst.

Vorteilhafte Ausführungen der Erfindung sind in den kennzeichnenden Merkmalen der Unteransprüche beschrieben.

Hauptkennzeichen der Erfindung ist dabei, dass während des Anlagenbetriebs ein Rohr der erfindungsgemäßen Vorrichtung auf die Strömungsanlage im Bereich der durchzuführenden Strömungsmessung fluiddicht installiert, auf diesem eine Absperrarmatur montiert und mittels eines bekannten Anbohrverfahrens unter Druck (Hot-Tapping-Verfahren) die Strömungsanlage in der erfindungsgemäßen Vorrichtung aufgebohrt, ein Einschubfenster in das Vorrichtungsgehäuse dergestalt eingeschoben und arretiert wird, dass die dem Fluid zugewandte Seite des Einschubfensters der Strömungsanlagenkontur an dieser Stelle entspricht und abschließend die Einschubvorrichtung aus dem Vorrichtungsgehäuse wieder entfernt und auf dem Vorrichtungsgehäuse ein Schauglas montiert wird, so dass an dieser Anlagenstelle während des Anlagenbetriebs die optische Zugänglichkeit zum Fluid für optische Strömungsmessungen hergestellt wird, ohne die Strömung im Anlagenströmungskanal bzw. der Strömungsgrenzschicht der Anlage zu beeinflussen und ohne den Anlagenbetrieb unterbrechen zu müssen. Der gesamte Vorgang erfolgt dabei durch den geeigneten Einsatz der Absperrarmatur sowie durch Dichtelemente zwischen Einschubvorrichtung und Vorrichtungsgehäuse ohne Fluidleckage aus der Strömungsanlage bzw. der erfindungsgemäßen Vorrichtung.

Ergebnis ist somit, dass mit der vorliegenden Erfindung in schon vorhandenen Anlagen wie sich im Betrieb befindlichen Fernwärmenetzen die volumetrische Durchflussmessung sowie die adaptive Messkalibrierung volumetrischer Durchflussmessungen von Fluiden mittels optischer Strömungsmessverfahren wie Laser-Doppler-Velozimetrie und Partikel-Image-Velozimetrie direkt in der Anlage vor Ort ermöglicht wird, ohne für den Einbau der Vorrichtung oder die Durchführung Strömungsmessung den Anlagenbetrieb unterbrechen zu müssen und ohne die Strömungsverhältnisse durch die Messung selbst zu beeinflussen.

In einer vorteilhaften Ausgestaltung der Erfindung wird als fluiddichte Installation eines Vorrichtungsrohres auf die Strömungsanlage ein Anschweißrohr auf die Wand der Strömungsanlage, insbesondere auf eine Rohrleitung der Strömungsanlage fluiddicht im Bereich der durchzuführenden Strömungsmessung aufgeschweißt.

In einer weiteren vorteilhaften Ausgestaltung der Erfindung handelt es sich bei der auf das Anschweißrohr zu montierenden Absperrarmatur beispielsweise um einen Kugelhahn oder um einen Flachschieber, wobei für die Funktionsfähigkeit der Vorrichtung entscheidend ist, dass bei geöffneter Armaturstellung auch innerhalb der Armatur der volle Vorrichtungs-Innendurchmesser zum Einschieben des Einschubfensters gewährleistet ist.

In einer weiteren vorteilhaften Ausgestaltung der Erfindung ist auf der Absperrarmatur ein Einsteckrohr montiert, um bei der Durchführung des Einschubverfahrens bzw. beim Wiederherausnehmen des Einschubfensters einen leckagefreien Verfahrensablauf zu vereinfachen.

In einer weiteren vorteilhaften Ausgestaltung der Erfindung sind insbesondere bei höheren Anlagendrücken Vorrichtungsgehäuse und Einschubvorrichtung beispielsweise mittels eines Fangseiles trennbar miteinander verbunden, das durch eine geeignete Länge verhindert, dass bei geöffneter Absperrarmatur die Einschubvorrichtung versehentlich aus dem Vorrichtungsgehäuse herausrutscht und damit u.U. gefährliche Fluidleckagen aus der Strömungsanlage verhindert. Das Fangseil kann dabei vorteilhaft mittels Ringösen und Karabinerhaken bzw. Schraubschäkel an den Vorrichtungsteilen trennbar verbunden sein.

In einer weiteren vorteilhaften Ausgestaltung der Erfindung ist die Arretierung des Einschubfensters in das Vorrichtungsgehäuse (Anschweißrohr) als Bajonettverschluss ausgeführt. Hierbei sind in vorteilhafter Weise die Einschubfenster-Bajonettriegel mit doppelseitig wirkenden Federdruckstiften ausgestattet, die zur Arretierung des Einschubfensters beispielsweise in entsprechende Anbohröffnungen des Anschweißrohr-Bajonettverschlusses einrasten.

In einer weiteren vorteilhaften Ausgestaltung der Erfindung ist die Arretierung des Einschubfensters in die Einschubvorrichtung als Bajonettverschluss ausgeführt. Hierbei sind in vorteilhafter Weise die Einschubvorrichtungs-Bajonettriegel mit doppelseitig wirkenden Federdruckstiften ausgestattet, die zur Arretierung der Einschubvorrichtung beispielsweise in entsprechende Anbohröffnungen des Einschubfensters bzw. der Einschubfensterhülse einrasten.

In einer weiteren vorteilhaften Ausgestaltung der Erfindung ist für die Installation des Einschubfensters im Aufbohrbereich der Strömungsanlage eine Momentenabstützung, betätigt durch eine Momentenabstützwelle, vorgesehen, die beim Lösen der Arretierung zwischen dem Einschubfenster und der Einschubvorrichtung das Lösen der Arretierung zwischen Einschubfenster und dem Anschweißrohr verhindert.

Somit werden die der Erfindung zugrunde liegenden Aufgaben durch das bereitgestellte Verfahren sowie durch die bereitgestellte Vorrichtung zur Durchführung des Verfahrens vollkommen gelöst.

Nachfolgend wird ein bevorzugtes Ausführungsbeispiel der Erfindung weiter unter Bezugnahme auf die beigefügten Zeichnungen erläutert. Es zeigen:

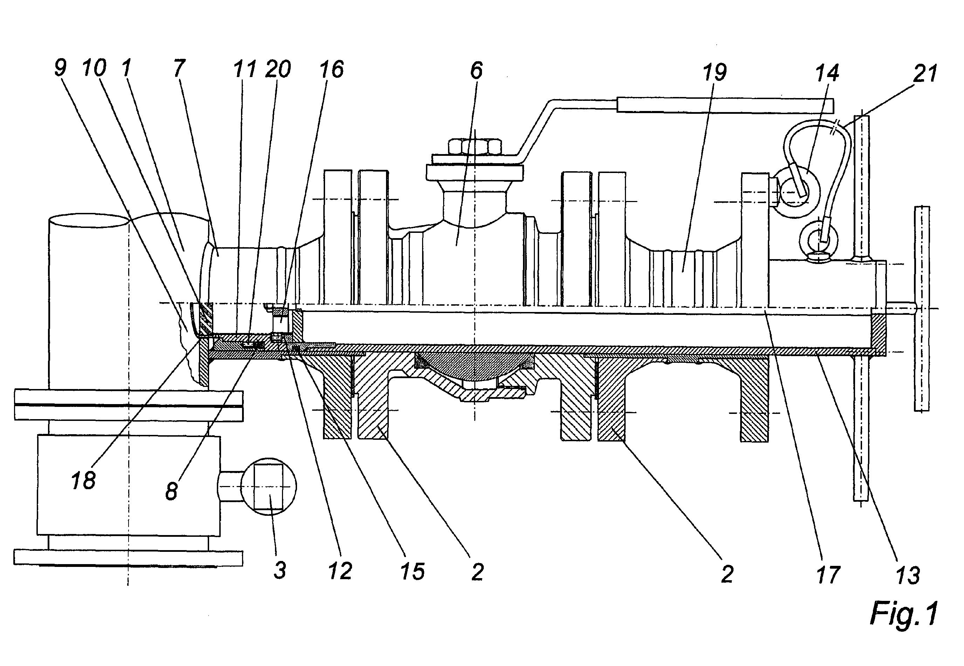

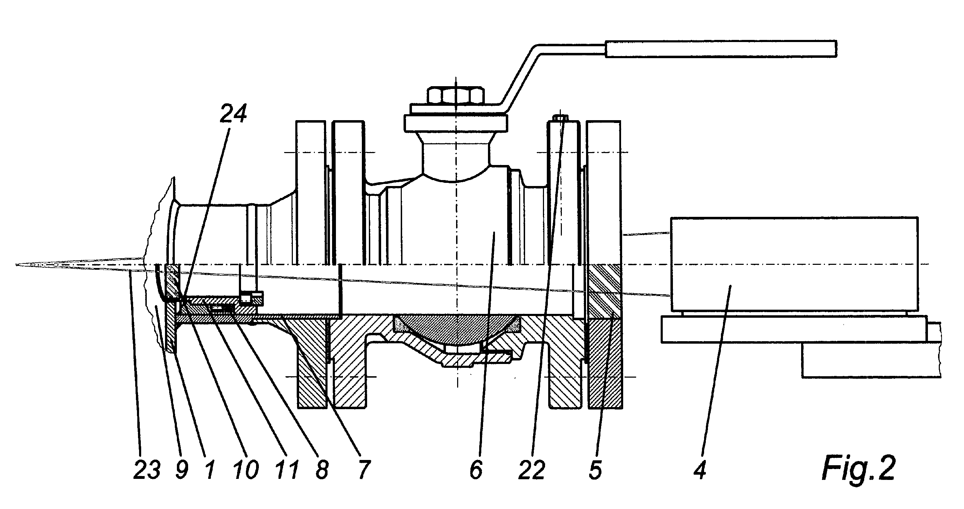

**Fig.**1 eine erfindungsgemäße Vorrichtung in der Einschubkonfiguration und **Fig.**2 eine erfindungsgemäße Vorrichtung in der Messkonfiguration.

In **Fig.**1 ist eine erfindungsgemäße Einschubvorrichtung mit einem im Aufbohrbereich **18** fluiddicht aufgeschweißten Anschweißrohr **7** und einer Bohrung in der Wand der hydraulischen Anlage **1** innerhalb des Anschweißrohres **7** dargestellt. In der Rohrleitung der hydraulischen Anlage **1** fließt dabei ein Fluid **9.** Mittels einer Schraubflanschverbindung **2** ist ein Kugelhahn **6** auf dem Anschweißrohr **7** montiert, und auf diesem ein Einsteckrohr **19** zum erleichterten Einschieben der Einschubvorrichtung **12,13** in das Vorrichtungsgehäuse. Im Aufbohrbereich **18** der hydraulischen Anlage **1** befindet sich ein Einschubfenster **10,11,** das im Anschweißrohr **7** mittels eines Bajonettverschlusses **8** lösbar arretiert ist, so dass die dem Fluid **9** zugewandte Seite des Einschubfensters **10** der Strömungskanalkontur der hydraulischen Anlage **1** am Messort entspricht. Die Einschubvorrichtung **12,13** ist geeignet, zum Einen die Einschubfensteranordnung **10,11** in den Aufbohrbereich **18** der hydraulischen Anlage **1** zu schieben und dort im Bajonettverschlusses **8** des Anschweißrohres **7** zu befestigen, und zum Anderen, die Einschubfensteranordnung **10,11** aus dem Bajonettverschlusses **8** des Anschweißrohres **7** zu lösen und aus der erfindungsgemäßen Vorrichtung wieder herauszuziehen. Die lösbare Arretierung zwischen dem Einschubfensteranordnung **10,11** und der Einschubvorrichtung **12,13** erfolgt ebenfalls durch Bajonettverschluss **12.** Für die Installation der Einschubfensteranordnung **10,11** im Aufbohrbereich **18** der hydraulischen Anlage **1** ist eine Momentenabstützung **16,** betätigt durch eine Momentenabstützwelle **17,** vorgesehen, die beim Lösen des Bajonettverschlusses **12** zwischen der Einschubfensteranordnung **10,11** und der Einschubvorrichtung **12,13** das Lösen des Bajonettverschlusses **8** zwischen Einschubfensteranordnung **10,11** und dem Anschweißrohr **7** verhindert. Die Bajonettverschlüsse **8,12** sind als Anbohröffnungen ausgeführt, in die doppelt wirkende Federdruckstifte **20** einrasten. Auf dem Kugelhahn **6** ist ein Einsteckrohr **19** zum erleichterten Einschieben und Herausziehen der Einschubvorrichtung **12,13** montiert. Das Einschubrohr **13** ist gegenüber dem Anschweißrohr **7,** dem Kugelhahn **6** und dem Einsteckrohr **19** mittels einer Rundschnurdichtung **15** abgedichtet, um Leckage aus der Strömungsanlage **1** während des Einschiebens oder Herausziehens der Einschubfensteranordnung **10,11** bei geöffnetem Kugelhahn **6** zu verhindern. Einsteckrohr **19** und Einschubvorrichtung **12,13** sind mittels Ringösen, Karabinerhaken bzw. Schraubschäkel und eines Fangseiles **21** trennbar miteinander verbunden, das durch geeignete Länge verhindert, dass bei geöffnetem Kugelhahn **6** die Einschubvorrichtung **12,13** versehentlich aus dem Einsteckrohr **19** herausrutscht und damit u.U. gefährliche Fluidleckagen aus der Strömungsanlage verursacht.

**Fig.**2 zeigt die erfindungsgemäße Vorrichtung in der Messkonfiguration, d.h. das Einschubfenster **10,** eingeklebt in eine Einschubfensterhülse **11,** ist hier im Bajonettverschluss **8** des Anschweißrohres **7** eingerastet, die Einschubvorrichtung aus dem Vorrichtungsgehäuse herausgezogen, das Einsteckrohr vom Kugelhahn **6** zur Verkürzung der Messanordnung demontiert und ein Schauglasflansch **5** fluiddicht auf dem Kugelhahn **6** montiert, so dass somit die optische Zugänglichkeit zum Fluid **9** für den Laser-Kreuzstrahl **23** des Laser-Doppler-Velozimeters (LDV) **4** hergestellt ist. Eine Entlüftungseinrichtung **22** sogt dafür, dass für die Lasermessungen der gesamte Innenraum der erfindungsgemäßen Vorrichtung mit dem Fluid **9** befüllt ist. Dabei kann entweder der Innenraum der Vorrichtung, beispielsweise bei aggressiven Medien, durch geeignete Abdichtungsmaßnahmen der Einschubfensteranordnung **10,11** gegenüber dem Anschweißrohr **7** bzw. der Rohrleitung abgedichtet sein, oder im Gegenteil, wie hier dargestellt, um die Wandstärke des Einschubfensters **10** möglichst gering wählen zu können, zwischen Fluid **9** der hydraulischen Anlage **1** und dem Innenraum der Vorrichtung durch eine Druckentlastungs-Bohrung **24** in der Einschubfensteranordnung **10,11** eine Druckentlastung erfolgen.

Durch sukzessives Verschieben des Laser-Doppler-Velozimeters (LDV) **4** mittels einer Traversiervorrichtung wird der Strömungsquerschnitt in der Rohrleitung der hydraulischen Anlage **1** durch das Einschubfenster **10** und den Schauglasflansch **5** hindurch mit dem LDV-Verfahren nacheinander abgetastet und somit das Strömungsprofil in axialer und/oder Umfangsrichtung ermittelt bzw. z.B. das magnetisch-induktive Messgerät (MID) **3** kalibriert.

### Bezugszeichenliste

- **1**: Rohrleitung einer hydraulischen Anlage
- **2**: Schraubflanschverbindung
- **3**: magnetisch-induktives Messgerät (MID)
- **4**: Laser-Doppler-Velozimeter (LDV)
- **5**: Schauglasflansch
- **6**: Kugelhahn
- **7**: Anschweißrohr
- **8**: Anschweißrohr-Bajonettverschluss
- **9**: Fluid
- **10**: Einschubfenster
- **11**: Einschubfensterhülse
- **12**: Fensterhülsen-Bajonettverschluss
- **13**: Einschubrohr
- **14**: Fangseilöse
- **15**: Rundschnurdichtung
- **16**: Momentenabstützung
- **17**: Momentenabstützwelle
- **18**: Aufbohrbereich der Strömungsanlage
- **19**: Einsteckrohr
- **20**: Doppelseitig wirkender Federdruckstift
- **21**: Fangseil
- **22**: Entlüftungseinrichtung
- **23**: Laser-Kreuzstrahl
- **24**: Druckentlastungs-Bohrung

## Patentansprüche

1. Verfahren zur Herstellung der optischen Zugänglichkeit zu Strömungsanlagen für optische Strömungsmessungen von Fluiden in Strömungsanlagen, ohne die Strömungsverhältnisse durch die Messung selbst zu beeinflussen und ohne den Anlagenbetrieb für den Einbau der Vorrichtung und die Durchführung der Strömungsmessung unterbrechen zu müssen, **dadurch gekennzeichnet, dass**
a) mindestens ein Rohr (7) auf der strömungsmesstechnisch zu untersuchenden Stelle einer Strömungsanlage (1) fluiddicht installiert wird,
b) mindestens eine Absperrarmatur (6) an dem auf der Strömungsanlage (1) installierten Rohr (7) fluiddicht montiert wird,
c) durch ein Anbohrverfahren unter Druck (Hot-Tapping-Verfahren) die Wand der Strömungsanlage (1) innerhalb des auf die Strömungsanlage (1) installierten Rohres (7) aufgebohrt und vor dem vollständigen Herausziehen der Bohrvorrichtung die Absperrarmatur (6) geschlossen wird,
d) anschließend eine Einschubfensteranordnung (10, 11), bestehend aus einem in eine Einschubfensterhülse (11) eingeklebten Einschubfenster (10), in ein auf der Absperrarmatur (6) fluiddicht montiertes Einsteckrohr (19) eingeschoben, die Absperrarmatur (6) geöffnet und die Einschubfensteranordnung (10, 11) mittels einer Einschubvorrichtung (13) in der Weise in den Aufbohrbereich (18) des zuvor beschriebenen Anbohrverfahrens der Strömungsanlage (1) eingeschoben und in dem installierten Rohr (7) arretiert wird, dass die dem Fluid (9) zugewandte Seite des Einschubfensters (10) und der Einschubfensterhülse (11) der Strömungskanalkontur der Strömungsanlage (1) an diesem Messort entspricht, d.h. dass die der Strömung zugewandte Seite des Einschubfensters (10) und der Einschubfensterhülse (11) der Form des durch die Anbohrung aus der Wand der Strömungsanlage (1) entfernten Kreissegments entspricht und die der Strömung zugewandte Seite des Einschubfensters (10) und der Einschubfensterhülse (11) sich bündig an die Innenwand der Strömungsanlage ohne Bildung einer die Strömung bzw. die Strömungsgrenzschicht beeinflussenden Stufe und mit nur geringem Spalt zwischen Bohrung der Strömungsanlage (1) und dem Einschubfenster (10) sowie der Einschubfensterhülse (11) einfügt und der Messquerschnitt zur Bestimmung des Volumenstromes eindeutig definiert ist,
e) danach die Arretierung zwischen Einschubfensteranordnung (10, 11) und Einschubvorrichtung (13) gelöst wird, so dass das Einschubfenster (10) mit der Einschubfensterhülse (11) in der Arretierungsvorrichtung des auf der Strömungsanlage (1) installierten Rohres (7) verbleibt,
f) die Einschubvorrichtung (13) in den Bereich des Einsteckrohres (19) zurückgezogen und im Bedarfsfall die Absperrarmatur (6) geschlossen wird, um ein Austreten des Fluids (9) aus der Strömungsanlage (1) zu verhindern,
g) das Einsteckrohr (19) von der Absperrarmatur (6) im Bedarfsfall zur Verkürzung der Messanordnung demontiert wird, und
h) abschließend ein Schauglas (5) auf der der Strömungsanlage (1) abgewandten Seite der Absperrarmatur (6) strömungsdicht montiert und die Absperrarmatur (6) nach Öffnen der Absperrarmatur (6) mit einer geeigneten Entlüftungseinrichtung (22) entlüftet wird, so dass nun durch das Schauglas (5), die geöffnete Absperrarmatur (6) und das Einschubfenster (10) hindurch optische Strömungsmessungen des Fluids (9) in der Strömungsanlage (1) möglich sind.

2. Vorrichtung zur Herstellung der optischen Zugänglichkeit zu Strömungsanlagen für optische Strömungsmessungen von Fluiden in Strömungsanlagen, ohne die Strömungsverhältnisse durch die Messung selbst zu beeinflussen, ohne den Anlagenbetrieb für den Einbau der Vorrichtung und die Durchführung der Strömungsmessung unterbrechen zu müssen, **umfassend**
a) mindestens ein an einer Strömungsanlage (1) mit einem darin fließenden Fluid (9) fluiddicht installiertes Rohr (7) der erfindungsgemäßen Vorrichtung, wobei die Wand der Strömungsanlage (1) innerhalb des installierten Rohres (7) aufgebohrt ist,
b) mindestens eine Absperrarmatur (6), die auf dem an der Strömungsanlage (1) installierten Rohr (7) fluiddicht montiert ist,
c) mindestens ein Einschubfenster (10), das in eine Einschubfensterhülse (11) eingeklebt ist,
d) mindestens eine Einschubfensteranordnung (10, 11), bestehend aus dem in die Einschubfensterhülse (11) eingeklebten Einschubfenster (10), die im durch das Anbohrverfahren unter Druck entstandenen Aufbohrbereich (18) der Strömungsanlage (1) in dem installierten Rohr (7) lösbar arretiert ist, so dass die dem Fluid (9) zugewandte Seite des Einschubfensters (10) der Strömungskanalkontur der Strömungsanlage (1) am Messort entspricht, d.h. dass die der Strömung zugewandte Seite des Einschubfensters (10) und der Einschubfensterhülse (11) der Form des durch die Anbohrung aus der Wand der Strömungsanlage (1) entfernten Kreissegments entspricht und die der Strömung zugewandte Seite des Einschubfensters (10) und der Einschubfensterhülse (11) sich bündig an die Innenwand der Strömungsanlage ohne Bildung einer die Strömung bzw. die Strömungsgrenzschicht beeinflussenden Stufe und mit nur geringem Spalt zwischen Bohrung der Strömungsanlage (1) und dem Einschubfenster (10) sowie der Einschubfensterhülse (11) einfügt und der Messquerschnitt zur Bestimmung des Volumenstromes eindeutig definiert ist,
e) mindestens eine Einschubvorrichtung (13), die geeignet ist, die Einschubfensteranordnung (10, 11), bestehend aus dem in die Einschubfensterhülse (11) eingeklebten Einschubfenster (10), in den Aufbohrbereich (18) der Strömungsanlage (1) zu schieben und dort in einer Arretierungsvorrichtung des installierten Rohres (7) zu befestigen, und die geeignet ist, die Einschubfensteranordnung (10, 11) aus der Arretierungsvorrichtung des installierten Rohres (7) im Aufbohrbereich (18) der Strömungsanlage (1) zu lösen und aus der Vorrichtung herauszuziehen,
f) mindestens eine Einschubfensteranordnung (10, 11), bestehend aus der Einschubfensterhülse (11) und dem Einschubfenster (10), die geeignet ist, mit der Einschubvorrichtung (13) in der Vorrichtung lösbar arretiert werden zu können,
g) mindestens ein Einsteckrohr (19), das zur Erleichterung des Herausziehens und Hereinschiebens der Einschubvorrichtung (13) an der Absperrarmatur (6) fluiddicht an der der Strömungsanlage (1) abgewandten Seite montiert ist,
h) mindestens ein Schauglas (5), das an der der Strömungsanlage (1) abgewandten Seite der Absperrarmatur (6) fluiddicht montiert ist, und
i) mindestens eine geeignete Entlüftungseinrichtung der Absperrarmatur (6).

3. Vorrichtung nach Anspruch 2, **dadurch gekennzeichnet, dass** das auf der Strömungsanlage (1) installierte Rohr (7) als auf der Wand der Strömungsanlage (1) im Messbereich d.h. im Aufbohrbereich (18) fluiddicht aufgeschweißtes Anschweißrohr (7) ausgeführt ist.

4. Vorrichtung nach Anspruch 2, **dadurch gekennzeichnet, dass** die Arretierungsvorrichtungen zwischen der Einschubfensteranordnung (10, 11) und dem Anschweißrohr (7) sowie zwischen der Einschubfensteranordnung (10, 11) und der Einschubvorrichtung (13) als Bajonettverschluss ausgeführt sind.

5. Vorrichtung nach Anspruch 2, **dadurch gekennzeichnet, dass** für die Installation der Einschubfensteranordnung (10, 11) im Aufbohrbereich (18) der Strömungsanlage (1) eine Momentenabstützung (16), betätigt durch eine Momentenabstützwelle (17), vorgesehen ist, die beim Lösen der Arretierung zwischen der Einschubfensteranordnung (10, 11) und der Einschubvorrichtung (12, 13) das Lösen der Arretierung zwischen der Einschubfensteranordnung (10, 11) und dem Anschweißrohr (7) verhindert.

6. Vorrichtung nach Anspruch 4, **dadurch gekennzeichnet, dass** die Bajonettverschlüsse (8, 12) als Anbohröffnungen ausgeführt sind, in die Federdruckstifte (20) einrasten.

7. Vorrichtung nach Anspruch 2, **dadurch gekennzeichnet, dass** das Einschubrohr (13) gegenüber dem Vorrichtungsgehäuse, d.h. gegenüber dem Anschweißrohr (7), der Absperrarmatur (6) und dem Einsteckrohr (19) sowie Einschubrohr (13) gegenüber Momentenabstützung (16) bzw. Momentenabstützwelle (17) mittels einer Rundschnurdichtung (15) abgedichtet sind, um Leckage aus der Strömungsanlage (1) während des Einschiebens oder Herausziehens der Einschubfensteranordnung (10, 11) bei geöffneter Absperrarmatur (6) zu verhindern.

8. Vorrichtung nach Anspruch 2, **dadurch gekennzeichnet, dass** es sich bei der Absperrarmatur (6) um einen Kugelhahn handelt.

9. Vorrichtung nach Anspruch 2, **dadurch gekennzeichnet, dass** bei ausreichender Länge des freien Einschubbereichs der Absperrarmatur (6) vor dem Absperrelement, d.h. auf der der Strömungsanlage (1) abgewandten Seite, auf den Einsatz eines Einsteckrohres (19) verzichtet werden kann und im Bedarfsfall zur Verhinderung eines versehentlichen Herausziehens des Einschubrohres (13) das Einschubrohr (13) und die Absperrarmatur (6) mittels Fangseilösen, Karabinerhaken und einem Fangseil (21) trennbar verbunden sind.

10. Verfahren nach Anspruch 1, **dadurch gekennzeichnet, dass** die optische Strömungsmessungen des Fluids (9) in der Strömungsanlage (1) mittels eines Laser-Doppler-Velozimeters (LDV) (4) erfolgen, wobei durch sukzessives Verschieben einer LDV-Sonde mittels einer Traversiervorrichtung der Strömungsquerschnitt in der Rohrleitung (1) durch das Einschubfenster (10), die geöffnete Absperrarmatur (6) und ein Schauglas (5) hindurch nacheinander abgetastet und somit das Strömungsprofil ermittelt werden kann.

11. Verfahren nach Anspruch 1, **dadurch gekennzeichnet, dass** die optische Strömungsmessungen des Fluids (9) in der Strömungsanlage (1) mittels eines Verfahrens der Partikel-Image-Velozimetrie (PIV) erfolgen.

12. Verfahren nach Anspruch 1, **dadurch gekennzeichnet, dass** durch das optische Messverfahren ein Durchflussmessgerät (3) kalibriert wird.

13. Verfahren nach Anspruch 1, **dadurch gekennzeichnet, dass** mittels der optischen Strömungsmessungen in der Strömungsanlage am Messort Strömungsgeschwindigkeit, Wirbelausbildung, Drall und Strömungsverteilung in axialer und Umfangsrichtung ermittelt werden.

14. Vorrichtung nach Anspruch 2, **dadurch gekennzeichnet, dass** Einsteckrohr (19), Einschubrohr (13) und Momentenabstützwelle (17) mit Markierungen versehen sind, so dass während des gesamten Einschub- und Herausziehvorgangs der Einschubfensteranordnung (10, 11) sowohl die genaue Axial- und Winkelposition der Einschubfensteranordnung (10, 11) gegenüber Anschweißrohr (7) bzw. der Anschweißrohrarretierung (8) als auch der Einschubfensteranordnung (10, 11) gegenüber der Einschubvorrichtung (12, 13) bekannt ist.

15. Vorrichtung nach Anspruch 2, **dadurch gekennzeichnet, dass** in der Wand des auf der Strömungsanlage (1) fluiddicht aufgeschweißten Anschweißrohres (7) mindestens ein zusätzliches optisch durchlässiges Fenster angeordnet ist, das auch Strömungsmessungen bzw. Kalibriermessungen schräg durch mindestens eines dieser Fenster sowie durch die Einschubfensteranordnung (10, 11) hindurch im Fluid (9) der Strömungsanlage (1) ermöglicht.
